**Europäisches Patentamt**

**European Patent Office**

**Office européen des brevets**

(19)

(11) Publication number: **0 095 457
B1**

(12) # EUROPEAN PATENT SPECIFICATION

(45) Date of publication of patent specification: **30.09.87**

(51) Int. Cl.⁴: **F 02 C 5/06,** F 02 G 3/00

(21) Application number: **81901922.5**

(22) Date of filing: **09.07.81**

(86) International application number:
**PCT/EP81/00097**

(87) International publication number:
**WO 83/00190 20.01.83 Gazette 83/02**

(54) **A METHOD OF OPERATING AN INTERNAL COMBUSTION ENGINE WITH AN AIR COMPRESSOR DRIVEN THEREBY.**

(43) Date of publication of application:
**07.12.83 Bulletin 83/49**

(45) Publication of the grant of the patent:
**30.09.87 Bulletin 87/40**

(84) Designated Contracting States:
**AT CH DE FR GB LI LU NL SE**

(56) References cited:
**DE-C- 844 994
GB-A- 475 169
GB-A- 538 022
US-A-2 123 009
US-A-2 168 726
US-A-3 680 305**

(73) Proprietor: **ANDERBERG, Ake Elvir (Deceased)
Legally represented by ABELIN, Rudolf K.
Tessins väg 14
S-217 58 Malmö (SE)**

(72) Inventor: **ANDERBERG, Ake Elvir (Deceased)
Legally represented by ABELIN, Rudolf K.
Tessins väg 14
S-217 58 Malmö (SE)**

(74) Representative: **Ström, Tore et al
Ström & Gulliksson AB Studentgatan 1 P.O. Box
4188
S-203 13 Malmö (SE)**

Courier Press, Leamington Spa, England.

## Description

The invention relates to a method of operating an internal combustion engine with an air compressor driven thereby, which absorbs the total power output of the engine, a first part of the pressurized air from the compressor being supplied to the internal combustion engine as intake air and a second part being shunted past the internal combustion engine to be supplied together with the exhaust gases from the engine to a working machine to be caused to expand therein while performing work.

GB—A—538,022 discloses a compressor-coupled internal combustion engine wherein the heat available from cooling the engine is turned to useful account.

US—A—3,680,305 teaches the case of a portion of pressurized air for cooling the engine, said portion being branched from the intake air supply.

The object of the invention is to achieve a very high total efficiency of the system in utilizing the pressurized air from the compressor to produce work by a complete heat regeneration between the pressurized air and the internal combustion engine, implying that all the heat produced due to energy losses in the engine compressor system is preserved, through the possibility of adjusting the flow of cooling air and the flow of combustion air of the internal combustion engine to the characteristics of the engine.

For this purpose the method according to the invention has been given the characteristics appearing from claim 1.

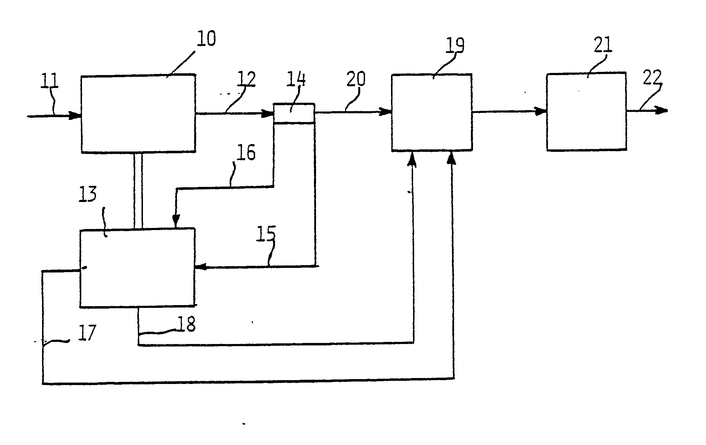

In order to explain the invention in more detail reference is made to the block diagram of the accompanying drawing, which illustrates the method according to the invention.

A compressor 10 which aspirates atmospheric air at 11 and supplies pressurized air at 12, is connected to an internal combustion engine 13 so as to absorb the total power output thereof. The compressor may be of any type, and also as far as the internal combustion engine is concerned it may be of any type, an Otto cycle engine or a Diesel engine of the 2-stroke or 4-stroke construction, air-cooled or water-cooled. Via a control device 14 the pressurized air from the compressor is supplied on the one hand as combustion air to the internal combustion engine at 15 and on the other hand as cooling air to the internal combustion engine at 16. The cooling air may either cool the internal combustion engine directly (air cooling) or absorb heat from the internal combustion engine via a liquid cooling system (liquid cooling).

The internal combustion engine gives off, on the one hand hot exhaust gases from the combustion at 17 and on the other hand heated cooling air at 18, and these gas flows are received by a plenum 19 together with part of the pressurized air, supplied directly from the compressor at 20, to be conveyed from the plenum to a working machine (expander) 21, in which the gases are caused to expand and then to escape to the atmosphere at 22. Thus, work from the fuel which is supplied to the internal combustion engine, is recovered in the working machine.

The amount of cooling air to the engine must be adjusted by means of the control device 14 to obtain a desired engine temperature and the necessary amount of cooling air always constitutes only a small proportion of the total amount of pressurized air supplied from the compressor. Also the amount of combustion air to the internal combustion engine must be adjusted by means of the control device 14, namely in such a manner that a moderate pressure drop over the engine is achieved. If the total amount of pressurized air from the compressor minus the amount of cooling air were to be supplied to the internal combustion engine as combustion air, such a great pressure drop would be obtained over the internal combustion engine that the pressure in the plenum 19 would be considerably lower than the pressure at the pressure side of the compressor, which would lead to a low efficiency in the thermal process through which the air goes via compression, heating and expansion, and would mean that little power could be recovered from the engine compressor system. In addition, in an internal combustion engine of the 2-stroke type, the air factor of the engine is influenced by the amount of scavenging air, so that in case of this type of engine there is a further reason for adjusting the amount of air supplied to the engine.

Taking into consideration the fact that the supply of cooling air and combustion air to the internal combustion engine must be controlled so as to achieve the most favourable operating conditions for the internal combustion engine as explained above, and hence a satisfactory efficiency and a satisfactory power of the engine compressor unit, some of the compressed air from the compressor is shunted, according to the invention, by means of the control device directly to the plenum 19, as indicated at 20. Thus, the plenum receives three component amounts of air, all of which originate from the compressor, namely a first component amount of air 15 in the form of combustion air which is given off by the internal combustion engine as exhaust gases at 17 and is supplied to the plenum (the exhaust gases representing an equally great amount of gas as the combustion air supplied to the internal combustion engine), a second component amount of air 16 in the form of cooling air of the internal combustion engine, which is given off, heated, from the internal combustion engine at 18 and is supplied to the collecting chamber, and a third component amount of air 20 which is supplied directly from the compressor to the plenum. Thus, by said three gas flows exhaust heat, cooling heat and compression heat is supplied to the plenum. In the plenum a homogeneous mixing of the three gas flows supplied is obtained and this mixture is the end-product of the engine compressor unit, i.e. a hot high-pressure gas which can perform work in the working machine (the expander).

The heat regeneration described is complete since all the amounts of heat due to energy losses are preserved: the exhaust heat directly and the cooling heat and friction heat via the part of the compressor air which is used as cooling gas. Since there is great freedom with regard to the selection of the thermodynamic characteristics of this low-pressure process, this can be taken very far with regard to efficiency, which provides the possibility of achieving very high degrees of efficiency, particularly when a high-class internal combustion engine is used.

The pressurized air used for the cooling has a greater heat absorption capacity than cooling air at a lower pressure, which leads to a more effective cooling of an air-cooled internal combustion engine and provides the possibility of using a smaller radiator without a fan in the case of a liquid-cooled internal combustion engine. The pressurized air which is supplied to the internal combustion engine as combustion air, provides supercharging of the engine, the air pressure and air amount being adjusted as to the requirements of the engine.

## Claim

A method of operating an internal combustion engine (13) with an air compressor (10) driven thereby, which absorbs the total power output of the engine, a first part (15) of the pressurized air from the compressor being supplied to the internal combustion engine (13) as intake air and a second part (20) being shunted past the internal combustion engine (13) to be supplied together with the exhaust gases (17) from the engine to a working machine to be caused to expand therein while performing work, characterized in that a third part (16) of the pressurized air, constituting the rest of the pressurized air totally delivered by the compressor, is supplied to the internal combustion engine as cooling air, and that the cooling air (18), after having absorbed heat from the engine, together with the shunted air and the exhaust gases is supplied to a plenum (19) for mixing, the air-gas mixture obtained in the plenum then being supplied to the working machine.

## Patentanspruch

Verfahren zum Betrieb einer Brennkraftmaschine (13) mit einem von dieser getriebenen Luftverdichter (10), welcher die gesamte Ausgangsleistung der Maschine aufnimmt, wobei ein erster Teil (15) der verdichteten Luft vom Luftverdichter der Brennkraftmaschine (13) als Ansaugluft zugeführt wird und ein zweiter Teil (20) parallel zur Brennkraftmaschine (13) geleitet und zusammen mit den Abgasen (17) der Maschine einer Arbeitsmaschine zur Verrichtung von durch Entspannung freiwerdender Arbeit zugeführt wird, dadurch gekennzeichnet, dass ein dritter Teil (16) der verdichteten Luft, welcher den Rest der gesamten vom Luftverdichter gelieferten verdichteten Luft bildet, der Brennkraftmaschine als Kühlluft zugeführt wird, und dass die Kühlluft (18) nach Aufnahme von Abwärme der Maschine zusammen mit der parallel geleiteten Luft und den Abgasen in eine Mischkammer (19) gelangt und das in der Mischkammer erhaltene Luft-Gas-Gemisch dann der Arbeitsmaschine zugeführt wird.

## Revendication

Procédé d'actionnement d'un moteur à combustion interne (13) à un compresseur à air (10) entrainé par le moteur, qui absorbe la totalité de la puissance produite par le moteur, une première partie (15) de l'air compressé par le compresseur étant fournie au moteur à combustion interne (13) comme air d'admission et une seconde partie (20) étant dérivée, au delà du moteur à combustion interne (13) pour être fournie en même temps que les gaz d'échappement (17) du moteur à une machine de travail pour s'y détendre en fournissant du travail, caractérisé par le fait que la troisième partie (16) de l'air compressé constituant le reste de la totalité de l'air compressé fourni par le compresseur, est fournie au moteur à combustion interne comme air de refroidissement et en ce que l'air de refroidissement (18) après avoir absorbé la chaleur du moteur, est fourni, en même temps que l'air dérivé et les gaz d'échappement à une chambre de mélange (19) pour étre mélangé, le mélange air-gaz obtenue dans la chambre de mélange étant alors fourni à la machine de travail.